# EUROPÄISCHE PATENTSCHRIFT

(11) **EP 2 332 204 B1**
(45) Veröffentlichungstag und Bekanntmachung des Hinweises auf die Patenterteilung: **02.07.2014**
(21) Anmeldenummer: 09749006.4
(22) Anmeldetag: 29.10.2009
(51) Int. Cl.: H01M 8/04

(54) **BRENNSTOFFZELLENSYSTEM MIT EINER VERSORGUNGSANORDNUNG**
FUEL CELL SYSTEM HAVING SUPPLY ASSEMBLY
SYSTÈME DE PILES À COMBUSTIBLES AVEC UN AGENCEMENT D'ALIMENTATION

(30) Priorität: 19.11.2008 DE 102008058072
(43) Veröffentlichungstag der Anmeldung: 15.06.2011
(73) Patentinhaber: Daimler AG, 70327 Stuttgart (DE)
(72) Erfinder: KONRAD, Gerhard, 89081 Ulm (DE); KUNCKEL, Heiner, 72535 Heroldstatt (DE); HEUMOS, Martin, 86923 Finning (DE)
(74) Vertreter: JENSEN & SON
(86) Internationale Anmeldenummer: PCT/EP2009/007753
(87) Internationale Veröffentlichungsnummer: WO 2010/057567

(56) Entgegenhaltungen:
- WO-A2-2004/079269
- DE-A1-102007 003 144
- US-A- 5 194 154
- US-A1- 2001 010 875
- US-A1- 2001 021 467
- US-A1- 2003 091 881
- US-A1- 2007 122 669

## Beschreibung

Die Erfindung betrifft eine Brennstoffzellenvorrichtung mit einer Gas-zu-Gas-Befeuchtungseinrichtung, welche ausgebildet und/oder angeordnet ist, mit der Feuchtigkeit aus den Abgasen der Brennstoffzellenvorrichtung das Oxidationsmittel für die Brennstoffzellenvorrichtung zu befeuchten, wobei die Gas-zu-Gas-Befeuchtungseinrichtung einen Abgasbereich und einen Oxidationsmittelbereich aufweist, welche durch eine Trennschicht voneinander getrennt sind, wobei die Trennschicht eine Übertragung der Feuchtigkeit von dem Abgasbereich auf den Oxidationsmittelbereich zur Befeuchtung des Oxidationsmittels ermöglicht.

Bei Brennstoffzellensystemen spielt die Konditionierung der Verbrauchsgase, also insbesondere des Oxidationsmittels und des Brennstoffes, eine wichtige Rolle, um einen effiziente Energieausbeute und eine lange Lebensdauer des Brennstoffzellensystems zu gewährleisten. Zur Konditionierung des Oxidationsmittels ist es üblich, dieses zunächst zur Druckerhöhung zu komprimieren und nachfolgend abzukühlen. Nachdem die in einem Brennstoffzellensystem angeordnete Membranen, welche in den einzelnen Brennstoffzellen einen Anodenraum von einem Kathodenraum trennen, üblicherweise so genannte Polymerelektrolyt-Membranen (PEM), empfindlich gegen Austrocknung sind, muss jederzeit sichergestellt sein, dass das Oxidationsmittel auch ausreichend befeuchtet ist. Diese Befeuchtung wird üblicherweise durch Befeuchtungseinrichtungen in den Versorgungsleitungen des Brennstoffzellensystems sichergestellt.

Ein Beispiel für ein Brennstoffzellensystem zeigt die Druckschrift US 2005/0282051 A1, welche ein Wabenkörperbrennstoffzellensystem offenbart, das chemische Energie in elektrische Energie konvertiert. In der Einleitung der Druckschrift werden zwei Bauarten für Brennstoffzellen vorgestellt, wobei sich röhrenförmige Typen gemäß der ersten Bauart durch die strukturelle Robustheit und planare Typen gemäß der zweiten Bauart durch eine höhere Leistungsdichte, jedoch geringere mechanische Stabilität im Vergleich zu den röhrenförmigen Typen auszeichnen. Auf Basis dieser Überlegung wird eine Wabenkörperbrennstoffzellenstruktur vorgeschlagen, um die Vorteile einer hohen Leistungsdichte und einer strukturellen Robustheit zu vereinigen. Aus der nachfolgenden Beschreibung ergibt es sich, dass in dem Wabenkörper ergänzend weitere Funktionsgruppen integriert sein können.

Die Druckschrift US 2002/0155328 A1 betrifft ein Verfahren und eine Vorrichtung für die Übertragung von Wasserdampf in einem Kathodenversorgungssystem einer Brennstoffzelle. Die Zuführung des Oxidationsmittels erfolgt durch eine Mehrzahl von parallel zueinander angeordneten Röhren, die außenseitig von dem Kathodenabgas der Brennstoffzellen umspült sind, wobei Feuchtigkeit aus dem Kathodenabgas durch die Wände der Röhren hindurch an das zugeführte Oxidationsmittel übertragen wird. Die Enden der Röhren sind zur mechanischen Fixierung in Kunstharz eingebettet.

Die Druckschrift DE 10 2007 003 144 A1 betrifft eine Vorrichtung zur Aufbereitung von Reaktionsgasen in Brennstoffzellen. In dieser Druckschrift wird vorgeschlagen, zur Temperatureinstellung und zur Befeuchtung der als Reaktionsmedium zugeführten Luft die beiden Funktionen "Kühlung" und "Befeuchtung" in einer Funktionseinheit zu kombinieren, wobei sogenannte Hohlfasermembranen eingesetzt werden, die aus einem temperaturbeständigem Material bestehen. Bei einer konstruktiven Umsetzung in dieser Druckschrift wird vorgeschlagen, hochtemperaturfeste Membranen, vorzugsweise aus Keramik und beispielsweise aus Zeolith, Siliziumoxid, Aluminiumoxid oder temperaturstabile Polymermembranen zu verwenden. Diese Membranen werden in eine Kammer eingeklebt, um das Frischgas mit dem Abgas über die Hohlfasermembran derart zu führen und in Kontakt zu bringen, dass ein Übertrag von Wasserdampf aus dem Abgas zu dem Frischgas durch die Membranen hindurch erfolgen kann.

Das amerikanische Patent US 5194154 A offenbart eine Gas-zu-Gas-Befeuchtungseinrichtung, welche ausgebildet ist, mit der Feuchtigkeit aus den Abgasen der Brennstoffzellenvorrichtung das Oxidationsmittel für die Brennstoffzellenvorrichtung zu befeuchten, wobei die Gas-zu-Gas-Befeuchtungseinrichtung einen Abgasbereich und einen Oxidationsmittelbereich aufweist, welche durch eine Trennschicht voneinander getrennt sind, wobei die Trennschicht eine Übertragung der Feuchtigkeit aus dem Abgasbereich in den Oxidationsmittelbereich zur Befeuchtung des Oxidationsmittels ermöglicht, dadurch gekennzeichnet, dass die Gas-zu-Gas-Befeuchtungseinrichtung einen monolithischen Wabenkörper (13) zur Bildung des Abgasbereichs und des Oxidationsmittelbereichs aufweist.

Die amerikanische Offenlegungsschrift US 2003/0091881 A1 und die internationale Anmeldung WO 2004/079269 A2 offenbaren jeweils ein Brennstoffzellensystem mit einer Versorgungsanordnung mit einer Gas-zu-Gas-Befeuchtungseinrichtung, die wie in dem vorstehend genannten Patent US 5194154 A ausgebildet ist.

Der Erfindung liegt die Aufgabe zugrunde ein Brennstoffzellensystem mit einer Versorgungsanordnung vorzuschlagen, das einen kostengünstigen und/oder im Betrieb belastbaren Aufbau zeigt.

Diese Aufgabe wird durch Brennstoffzellensystem mit den Merkmalen des Anspruchs 1 gelöst.

Bevorzugte oder vorteilhafte Ausführungsformen der Erfindung ergeben sich aus den Unteransprüchen, der nachfolgenden Beschreibung sowie den beigefügten Figuren.

Die Erfindung betrifft somit ein Brennstoffzellensystem mit mindestens einer Brennstoffzellenvorrichtung und einer Versorgungsanordnung zur Versorgung der Brennstoffzellenvorrichtung mit einem Oxidationsmittel.

In der Brennstoffzellenvorrichtung ist vorzugsweise eine Mehrzahl von Brennstoffzellen angeordnet.

Die Versorgungsanordnung ist vorzugsweise als eine Kathodenversorgung ausgebildet und weist eine Gas-zu-Gas-Befeuchtungseinrichtung auf, welche es erlaubt, mit Feuchtigkeit aus Abgasen, insbesondere den Kathodenabgasen, der Brennstoffzellenvorrichtung ein Oxidationsmittel, insbesondere zugeführte Luft, für die Brennstoffzellenvorrichtung zu befeuchten. Um die Befeuchtung umzusetzen, weist die Gas-zu-Gas-Befeuchtungseinrichtung einen Abgasbereich und einen Oxidationsmittelbereich auf, welche durch eine feuchtigkeitspermeable Trennschicht voneinander getrennt sind, die eine Übertragung der Feuchtigkeit aus dem Abgasbereich in den Oxidationsmittelbereich zur Befeuchtung des Oxidationsmittels erlaubt. Wie eingangs bereits erläutert wurde, dient die Befeuchtung des Oxidationsmittels zur Konditionierung für die Anforderungen der Membran, insbesondere der protonenleitenden Membran (PEM), der Brennstoffzellenvorrichtung.

Im Rahmen der Erfindung wird vorgeschlagen, dass die Gas-zu-Gas-Befeuchtungseinrichtung einen monolithischen Wabenkörper zur Bildung des Abgasbereiches und des Oxidationsmittelbereiches aufweist. Insbesondere sind der Abgasbereich und der Oxidationsmittelbereich in einem gemeinsamen monolithischen Wabenkörper angeordnet.

Im Sinne der Erfindung ist ein monolithischer Körper ein Körper, welcher einstückig ausgebildet ist. Die einstückige Form kann durch ein Urformen, zum Beispiel Extrudieren, oder durch einen Abtragvorgang, z.B. Fräsen, Bohren etc., aus einem Halbzeug erzeugt sein. Unter einem Wabenkörper wird ein Körper verstanden, welcher mindestens zwei Waben, nämlich eine für den Abgasbereich und eine für den Oxidationsmittelbereich, aufweist. Vorzugsweise weist der Wabenkörper eine Vielzahl von Waben auf. Die Waben können im Querschnitt beliebig, also zum Beispiel rund, kreisförmig, oval, mehreckig, hexagonal, rechteckig etc. ausgebildet sein. Beispielsweise ist der monolithische Wabenkörper als ein Keramikkörper ausgebildet.

Bei einer bevorzugten Ausführungsform der Erfindung umfasst die Trennschicht, durch die die Feuchtigkeit von dem Abgasbereich in den Oxidationsmittelbereich bzw. von dem Abgas in das Oxidationsmittel übertragen wird, das Grundmaterial des monolithischen Wabenkörpers oder wird durch dieses gebildet. In einer einfachen Ausführungsform ist das Grundmaterial derart porös ausgebildet, dass dieses aus seinen Grundeigenschaften heraus die notwendigen Fähigkeiten zur Feuchtigkeitsübertragung aufweist.

Bei einer bevorzugten Weiterbildung der Erfindung ist die Trennschicht - also der Grundkörper des monolithischen Wabenkörpers - mit einem Material, wie zum Beispiel Zeolith, Siliziumdioxid, temperaturstabile Polymere oder Aluminiumoxid beschichtet und/oder behandelt.

In beiden Ausführungsformen ist die Durchlässigkeit der Trennschicht bzw. des Grundkörpers so ausgebildet, dass Sauerstoff aus dem Oxidationsmittel zurückgehalten und eine Durchlässigkeit für Feuchtigkeit, insbesondere Wasserdampf; erreicht wird.

Erfindungsgemäß weist der monolithische Wabenkörper eine Vielzahl von Kanälen als Waben auf, wobei eine erste Gruppe von Kanälen den Abgasbereich und eine zweite Gruppe von Kanälen den Oxidationsmittelbereich bildet. Die Gruppen können jeweils die gleiche Anzahl von Kanälen aufweisen, die Kanäle können aber auch ungleich verteilt sein. Die Kanäle können alle gleichartig realisiert sein, bei abgewandelten Ausführungsformen können sich die Kanäle - insbesondere gruppenabhängig - unterscheiden.

Bei einer möglichen Ausführungsform sind die Kanäle der ersten und der zweiten Gruppe in dem monolithischen Wabenkörper regelmäßig, vorzugsweise in Schichten, alternierend und/oder abwechselnd angeordnet. In einer ersten Schicht sind Kanäle des Oxidationsmittels, in einer zweiten Schicht sind Kanäle für Abgase und in einer dritten Schicht wieder Kanäle für Oxidationsmittel angeordnet, so dass die Feuchtigkeit ausgehend von der mittleren Schicht in zwei Richtungen übertragen werden kann.

Bei einer praxisnahen Umsetzung weist der monolithische Wabenkörper an einer Stirnseite eine oder mehrere offene Kopplungsöffnungen für eine der beiden Gruppen auf. Die Kopplungsöffnungen sind so ausgestaltet, dass diese mit einer Zuleitung bzw. einer Ableitung für das Abgas bzw. das Oxidationsmittel koppelbar sind. Vorzugsweise sind die Kopplungsöffnungen dieser Gruppe auf beiden Stirnseiten des monolithischen Wabenkörpers angeordnet.

Dagegen ist es auch bevorzugt, dass eine oder mehrere Kopplungsöffnungen der anderen Gruppe an der gleichen Stirnseite, zum Beispiel durch eine Verteilerkappe, verschlossen sind. Der Einsatz einer Verteilerkappe weist den Vorteil auf, dass zunächst alle Kopplungsöffnungen des monolithischen Wabenkörpers geöffnet sind, die dann selektiv durch die Verteilerkappe verschlossen werden. Statt einer Verteilerkappe können auch andere Verschlusselemente zur Sperrung der Kopplungsöffnungen der anderen Gruppe eingesetzt werden.

Erfindungsgemäß ist bzw. sind eine oder mehrere Kopplungsöffnungen von einer der Gruppen an der Umfangsfläche des monolithischen Wabenkörpers angeordnet. Insbesondere handelt es sich um die Kopplungsöffnungen für die Gruppe von Kanälen, welche nicht durch die Stirnseite erreichbar sind. Die umfangsseitigen Kopplungsöffnungen werden bevorzugt durch einen abtragenden Vorgang, insbesondere Einschlitzungen, geschaffen.

Beispielsweise wird somit eine getrennte Führung der Stoffströme des Abgases und des Oxidationsmittels durch verschlossene Kanalreihen auf der Stirnseite und durch seitliche Einschlitzungen in den verschlossenen Kanalreihen erreicht. Dem so präparierten monolithischen Wabenkörper kann ein Stoffstrom an der Stirnseite zugeführt werden, der sich auf die nicht verschlossenen Kanalreihen verteilt und diese durchströmt. Der zweite Stoffstrom wird den auf der Stirnseite verschlossenen Kanalreihen über die seitlichen Kopplungsöffnungen zugeführt und verlässt den monolithischen Wabenkörper am anderen Ende wieder durch die dort ebenfalls befindlichen seitlichen Kopplungsöffnungen.

Besonders bevorzugt ist es, wenn der monolithische Wabenkörper nur Stoffströme der ersten und der zweiten Gruppe führt.

Bei einer bevorzugten Weiterbildung der Erfindung ist vorgesehen, dass der monolithische Wabenkörper ergänzend als Ladeluftkühler dimensioniert und/oder ausgebildet ist. Oftmals wird der Oxidationsmittelzustrom verdichtet, wobei Verdichtungsendtemperaturen bis zu 200° C erreicht werden. Eine Temperatur, die für die nachgeschaltete Brennstoffstoffzellenvorrichtung zu hoch ist. Dadurch, dass als Gas-zu-Gas-Befeuchtungseinrichtung ein monolithischer Wabenkörper verwendet wird, der nur eine geringe Wärmeempfindlichkeit aufweist, kann das ungekühlte, verdichte Oxidationsmittel unmittelbar in den monolithischen Wabenkörper einströmen und in diesem sowohl abgekühlt werden als auch Feuchtigkeit aufnehmen.

Das Brennstoffzellensystem ist vorzugsweise als ein mobiles Brennstoffzellensystem, insbesondere zur Versorgung eines Kraftfahrzeuges mit Antriebsenergie ausgebildet. Die Brennstoffzellenvorrichtung weist bevorzugt einen oder mehrere Brennstoffzellenstapel mit einer Vielzahl von Brennstoffzellen, insbesondere mehr als 100, vorzugsweise mehr als 150 Brennstoffzellen, auf.

Das Brennstoffzellensystem ist bevorzugt dadurch gekennzeichnet, dass der unmittelbare und/oder maßgebliche Wärme- und/oder Feuchtigkeitsübertrag zwischen dem Oxidationsmittel und dem Kathodenabgas über die Gas-zu-Gas-Befeuchtungseinrichtung erfolgt. Insbesondere kann auf eine weitere Befeuchtungseinrichtung und/oder einen weiteren Ladeluftkühler zur Kühlung des komprimierten Oxidationsmittels verzichtet werden. Somit zeigt sich ein weiterer möglicher Nutzen der Erfindung, welcher zum einen in einer Verringerung der Anzahl der notwendigen Komponenten und zum anderen in einer höheren Belastbarkeit des Brennstoffzellensystems zu sehen ist.

Es ist bevorzugt vorgesehen, dass das Brennstoffzellensystem eine steuer- oder regelbare Bypassleitung aufweist, welche um die Gas-zu-Gas-Befeuchtungseinrichtung herum geführt ist, um durch das Verhältnis des durch die Gas-zu-Gas-Befeuchtungseinrichtung geführten Oxidationsmittels und des daran vorbei geführten Oxidationsmittels die Temperatur und zugleich die Feuchtigkeit des Oxidationsmittels einzustellen.

In einer praxisnahen Ausbildung der Erfindung ist der Gas-zu-Gas-Befeuchtungseinrichtung strömungstechnisch ein Kompressor zur Kompression des Oxidationsmittels vorgeschaltet und/oder eine Turbine zu Entspannung des Abgases nachgeschaltet. Vorzugsweise sind der Kompressor und die Turbine über eine Getriebe-Welle miteinander gekoppelt, so dass die bei der Entspannung entnommene Energie aus dem Abgas dem Oxidationsmittel als Kompressionsenergie zugeführt werden kann. Vorzugsweise ist der Gas-zu-Gas-Befeuchtungseinrichtung ein Kondensatabscheider zur Restentfeuchtung nachgeschaltet. Die Vorteile der Erfindung liegen darin, dass zum einen im Vergleich zum Stand der Technik ein aufwändiges Eingießen von Einzelmembranen in Kunstharz entfällt. Stattdessen wird ein mechanisch stabiler und somit unempfindlicher, einstückiger Körper verwendet. Zum anderen werden bevorzugte Ausführungsformen des monolithischen Wabenkörpers bereits bei der Abgasnachbehandlung von Verbrennungsmotoren umfangreich eingesetzt und sind daher kostengünstig und qualitativ hochwertig am Markt verfügbar.

Weitere Merkmale, Vorteile und Wirkungen der Erfindung ergeben sich aus der nachfolgenden Beschreibung bevorzugter Ausführungsbeispiel der Erfindung sowie der beigefügten Figuren. Dabei zeigen:
- Figur 1: eine schematische Blockdarstellung eines Brennstoffzellensystems mit einer Versorgungsanordnung als ein Ausführungsbeispiel der Erfindung;
- Figur 2: einen monolithischen Wabenkörper aus der Versorgungsanordnung in Figur 1 in frontseitiger Draufsicht, geschnittener Seitenansicht und geschnittener Draufsicht.

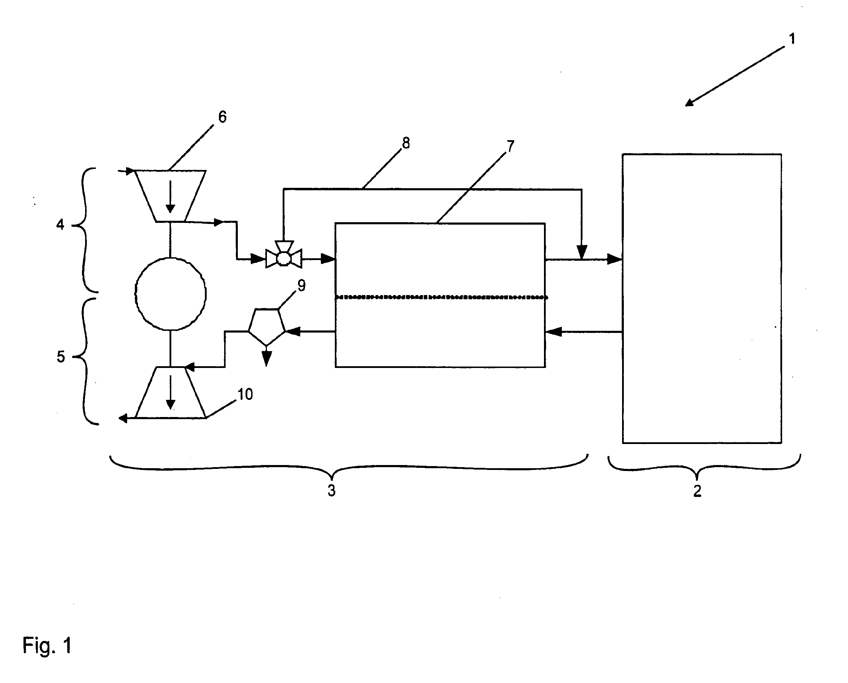

Die Figur 1 zeigt ein Brennstoffzellensystem 1 in einer schematischen Blockdarstellung. Das Brennstoffzellensystem 1 umfasst eine Brennstoffzellenvorrichtung 2, in der eine Vielzahl von Brennstoffzellen (nicht dargestellt) angeordnet sind, welche jeweils eine PE-Membram (Proton Exchange Membrane (PEM)) aufweisen. Eine Versorgungsanordnung 3 zur Versorgung bzw. Entsorgung der Brennstoffzellenvorrichtung 2 mit einem Oxidationsmittel ist über Verbindungsleitungen mit der Brennstoffzellenvorrichtung 2 verbunden. Nicht dargestellt sind weitere Versorgungseinrichtungen der Brennstoffzellenvorrichtung 2, wie zum Beispiel die Anodenversorgung.

Die Versorgungsanordnung 3 weist einen Versorgungszweig 4 und einen Entsorgungszweig 5 für das Oxidationsmittel auf. Der Versorgungszweig 4 versorgt die Brennstoffzellenvorrichtung 2 mit dem Oxidationsmittel, der Entsorgungszweig 5 führt die Abgase aus dem Kathodenbereich der Brennstoffzellenvorrichtung 2 ab.

Als Oxidationsmittel wird Umgebungsluft zugeführt, welche zunächst in einem Verdichter 6 komprimiert und dann einer Gas-zu-Gas-Befeuchtungseinrichtung 7 zugeleitet wird, welche - funktionell betrachtet - das verdichtete Oxidationsmittel abkühlt und befeuchtet. Das verdichtete und befeuchtete Oxidationsmittel wird dann der Brennstoffzellenvorrichtung 2 zugeführt. Um die Befeuchtung und/oder Kühlung einstellen zu können, ist ein Bypass 8 vorgesehen, welcher über ein Ventil so angesteuert werden kann, dass ein Teilstrom oder der gesamte Stoffstrom des Oxidationsmittels die Gas-zu-Gas-Befeuchtungseinrichtung 7 auf dem Weg zu der Brennstoffzellenvorrichtung 2 umläuft. Nachdem das Oxidationsmittel an der elektrochemischen Reaktion in der Brennstoffzellenvorrichtung 2 teilgenommen hat, wird der Abgasstrom wieder der Gas-zu-Gas-Befeuchtungseinrichtung 7 zugeführt, dort durch die Abwärme des verdichteten Oxidationsmittels erwärmt und entfeuchtet. Nach dem Verlassen der Gas-zu-Gas-Befeuchtungseinrichtung 7 wird in einem Kondensatabscheider 9 eventuell vorhandenes flüssiges Wasser abgeschieden und dann das Abgas in einer Turbine 10 entspannt und in die Umgebung entlassen. Die Turbine 10 ist über eine Getriebe-Welle mit dem Verdichter 6 gekoppelt, so dass durch die Turbine 10 der Verdichter 6 angetrieben werden kann.

Die Gas-zu-Gas-Befeuchtungseinrichtung 7 nimmt somit eine Doppelfunktion ein, nämlich zum einen eine Abkühlung des komprimierten Oxidationsmittels und zum zweiten eine Befeuchtung des Oxidationsmittels durch die Feuchtigkeit des Abgasstromes. Die Feuchtigkeit ist ein Abfallprodukt der elektrochemischen Reaktion zwischen dem Oxidationsmittel und dem Brennstoff in der Brennstoffzellenvorrichtung 2.

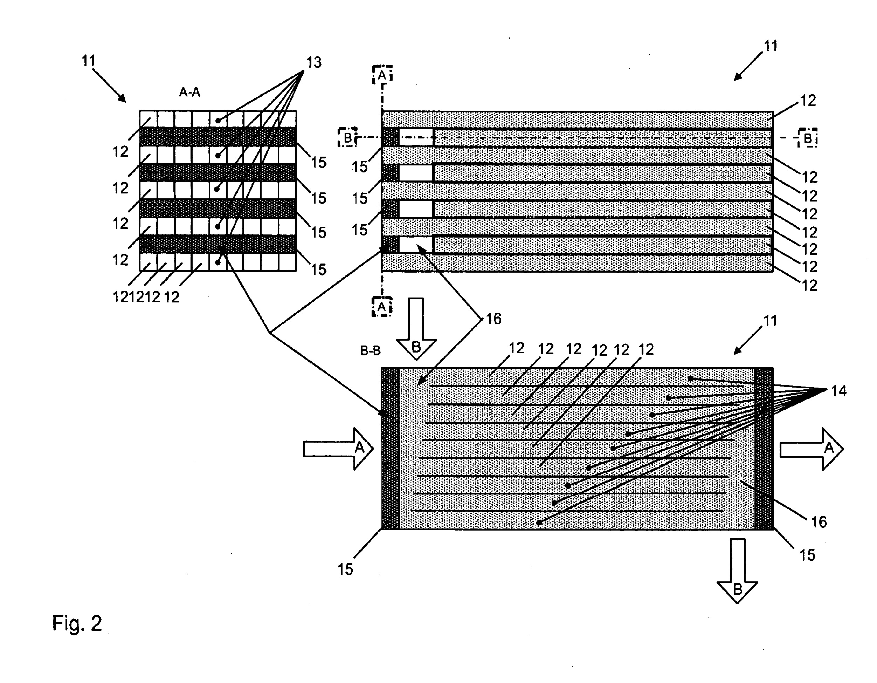

Die Figur 2 zeigt mehrere Ansichten eines monolithischen Wabenkörpers 11 in Form eines Quaders, welcher in der Gas-zu-Gas-Befeuchtungseinrichtung 7 integriert ist. Der monolithische Wabenkörper 11 ist in seiner Grundform extrudiert und beispielsweise aus einem temperaturstabilen Keramikmaterial gefertigt. Dadurch ist er in der Lage, ohne Beschädigungen die Temperaturen von bis zu 200 °C des komprimierten Oxidationsmittels ertragen zu können.

Der monolithische Wabenkörper 11 weist eine Vielzahl von Kanälen 12 auf, welche regelmäßig und gleichgerichtet in das einstückige Grundmaterial eingebracht sind. Die Kanäle 12 sind vorliegend mit einem quadratischen Querschnitt dargestellt, jedoch sind andere, beliebige Formen ebenso möglich.

Während der monolithische Wabenkörper 11 in seiner Ursprungsform nur eine Vielzahl der parallel zueinander orientierten Kanälen 12 bereitstellt, werden durch die nachfolgend erläuterten Modifikationen zwei Bereiche, ein Oxidationsmittelbereich 13 und ein Abgasbereich 14 in dem monolithischen Wabenkörper 11 gebildet bzw. abgeteilt. Dabei ist die Zuordnung der Bereiche gemäß dem in Fig. 2 gezeigten Ausführungsbeispiel rein beispielhaft. So ist es prinzipiell auch möglich, dass die mit 14 bezeichneten Bereiche als Oxidationsmittelbereich fungieren und die mit 13 bezeichneten Bereiche als Abgasbereich. Die beiden Bereiche 13, 14 werden voneinander durch Zwischenwände aus dem Grundmaterial des monolithischen Wabenkörpers 11 getrennt und werden im Betrieb mit den entsprechenden Stoffströmen Oxidationsmittel A und Abgas B durchströmt. Dabei ist die Zuordnung von A zu dem Oxidationsmittel und von B zum Abgas gemäß dem in Fig. 2 gezeigten Ausführungsbeispiel rein beispielhaft. So ist es prinzipiell auch möglich, dass A dem Abgas und B dem Oxidationsmittel zugeordnet ist.

Eine erste Modifikation wird durch das Verschließen von Kanalreihen auf der Frontseite des monolithischen Wabenkörpers 11, wie es in der Draufsicht gemäß A-A gezeigt ist, erreicht. Hierbei wird jede zweite Reihe durch Verschlusselemente 15 verschlossen, wobei die Verschlusselemente 15 auf beiden Stirnseiten des Wabenkörpers 11 eingesetzt werden. Das Oxidationsmittel A kann durch diese Modifikation sämtliche Kanäle 12 durchströmen, welche an den beiden Stirnseiten freie Kopplungsöffnungen zeigen. Die jeweils zweite Reihe ist dagegen beidseitig mit Verschlusselementen 15 gesperrt.

Um dem Abgas B eine Möglichkeit zur Durchströmung des monolithischen Wabenkörpers 11 zu geben, wird dieser seitlich mit Einschlitzungen 16 versehen, welche sich soweit erstrecken, dass in einer Zeile sämtliche Kanäle 12 miteinander kommunizierend oder offen verbunden sind. Die Abgase B können dann von der Umfangsseite her in den monolithischen Wabenkörper 11 eingeleitet werden, verteilen sich bei den Einschlitzungen 16 über alle Kanäle 12 und können parallel und gleich- oder gegengerichtet zu dem Oxidationsmittelstrom A den monolithischen Wabenkörper 11 durchströmen.

Der Oxidationsmittelstrom A und der Abgasstrom B sind nur durch die Trennschicht aus dem Grundkörper des monolithischen Wabenkörpers 11 voneinander getrennt, welcher als Membran so ausgebildet ist, dass Sauerstoff zurückgehalten, Feuchtigkeit, Wasserdampf oder Wasser aber durchgelassen wird. Optional kann die Trennschicht mit einer Beschichtung aus Zeolith, Siliziumdioxid oder Polymeren versehen sein.

## Patentansprüche

1. Brennstoffzellensystem (1) mit mindestens einer Brennstoffzellenvorrichtung (2) und einer Versorgungsanordnung (3) zur Versorgung der Brennstoffzellenvorrichtung (2) mit einem Oxidationsmittel (A),
wobei die Versorgungsanordnung (3) eine Gas-zu-Gas-Befeuchtungseinrichtung (7) aufweist, welche ausgebildet und/oder angeordnet ist, mit der Feuchtigkeit aus den Abgasen (B) der Brennstoffzellenvorrichtung (2) das Oxidationsmittel (A) für die Brennstoffzellenvorrichtung (2) zu befeuchten,
und wobei die Gas-zu-Gas-Befeuchtungseinrichtung (7) einen Abgasbereich (14) und einen Oxidationsmittelbereich (13) aufweist, welche durch eine Trennschicht voneinander getrennt sind, wobei die Trennschicht eine Übertragung der Feuchtigkeit aus dem Abgasbereich (14) in den Oxidationsmittelbereich (13) zur Befeuchtung des Oxidationsmittels (A) ermöglicht,
**dadurch gekennzeichnet, dass**
die Gas-zu-Gas-Befeuchtungseinrichtung (7) einen monolithischen Wabenkörper (11) zur Bildung des Abgasbereichs (14) und des Oxidationsmittelbereichs (13) aufweist;
wobei ferner in dem monolithischen Wabenkörper (11) eine Vielzahl von Kanälen (12) eingebracht sind, von denen eine erste Gruppe von Kanälen den Abgasbereich (14) und eine zweite Gruppe von Kanälen den Oxidationsmittelbereich (13) bildet,
und wobei eine oder mehrere Kopplungsöffnungen für eine der ersten oder der zweiten Gruppe von Kanälen an der Umfangsfläche des monolithischen Wabenkörpers (11) angeordnet ist oder sind.

2. Brennstoffzellensystem (1) nach Anspruch 1, **dadurch gekennzeichnet, dass** die Trennschicht das Grundmaterial des monolithischen Wabenkörper (11) umfasst oder durch dieses gebildet ist.

3. Brennstoffzellensystem (1) nach einem der Ansprüche 1 oder 2, **dadurch gekennzeichnet, dass** die Trennschicht mit einem funktionellen Material aus der Gruppe Zeolith, Siliziumdioxid oder Polymer beschichtet und/oder behandelt ist.

4. Brennstoffzellensystem (1) nach einem der Ansprüche 1 bis 3, **dadurch gekennzeichnet, dass** die erste und die zweite Gruppe von Kanälen in dem monolithischen Wabenkörper (11) regelmäßig alternierend angeordnet sind.

5. Brennstoffzellensystem (1) nach Anspruch 4, **dadurch gekennzeichnet, dass** die erste und die zweite Gruppe von Kanälen in dem monolithischen Wabenkörper (11) alternierend in Schichten angeordnet sind.

6. Brennstoffzellensystem (1) nach einem der Ansprüche 4 oder 5, **dadurch gekennzeichnet, dass** eine oder mehrere offene Kopplungsöffnungen für eine der beiden Gruppen von Kanälen an einer Stirnseite des monolithischen Wabenkörpers (11) angeordnet ist oder sind.

7. Brennstoffzellensystem (1) nach Anspruch 6, **dadurch gekennzeichnet, dass** eine oder mehrere Kopplungsöffnungen der anderen Gruppe von Kanälen an der Stirnseite, bevorzugt durch eine Verteilerkappe, verschlossen ist oder sind.

8. Brennstoffzellensystem (1) nach einem der Ansprüche 1 bis 7, **dadurch gekennzeichnet, dass** die umfangsseitigen Kopplungsöffnungen durch Abtragungen geschaffen sind.

9. Brennstoffzellensystem (1) nach Anspruch 8, **dadurch gekennzeichnet, dass** die umfangsseitigen Kopplungsöffnungen durch Einschlitzungen (16) geschaffen sind.

10. Brennstoffzellensystem (1) nach einem der Ansprüche 1 bis 9, **dadurch gekennzeichnet, dass** der unmittelbare Wärme- und Feuchtigkeitsübertrag zwischen dem Oxidationsmittel (A) und dem Abgas (B) in der Gas-zu-Gas-Befeuchtungseinrichtung (7) erfolgt.

11. Brennstoffzellensystem (1) nach Anspruch 10, **gekennzeichnet durch** eine Bypass-Leitung (8), welche um die Gas-zu-Gas-Befeuchtungseinrichtung (7) herum führt.

12. Brennstoffzellensystem (1) nach einem der vorhergehenden Ansprüche, **dadurch gekennzeichnet, dass** der Gas-zu-Gas-Befeuchtungseinrichtung (7) ein Kondensatabscheider nachgeschaltet ist.

## Claims

1. Fuel cell system (1) comprising at least one fuel cell device (2) and a supply arrangement (3) for supplying the fuel cell device (2) with an oxidant (A),
wherein the supply arrangement (3) comprises a gas-to-gas humidification device (7) which is designed and/or arranged to humidify the oxidant (A) for the fuel cell device (2) using the humidity from the exhaust gases of the fuel cell device (2),
and wherein the gas-to-gas humidification device (7) comprises an exhaust gas region (14) and an oxidant region (13) which are separated from one another by a barrier layer, the barrier layer allowing a transfer of the humidity from the exhaust gas region (14) into the oxidant region (13) for humidifying the oxidant (A),
**characterised in that**
the gas-to-gas humidification device (7) comprises a monolithic honeycomb body (11) for the formation of the exhaust gas region (14) and the oxidant region (13);
wherein further a plurality of passages (12) is provided in the monolithic honeycomb body (11), a first group of passages forming the exhaust gas region (14) and a second group of passages forming oxidant region (13),
and wherein one or more coupling openings is or are provided for one of the first or the second group of passages in the circumferential surface of the monolithic honeycomb body (11).

2. Fuel cell system (1) according to claim 1, **characterised in that** the barrier layer includes or is represented by the base material of the monolithic honeycomb body (11).

3. Fuel cell system (1) according to claim 1 or 2, **characterised in that** the barrier layer is coated and/or treated with a functional material from the group of zeolite, silicon dioxide or polymer.

4. Fuel cell system (1) according to any of claims 1 to 3, **characterised in that** the first and the second group of passages are expediently arranged to alternate regularly in the monolithic honeycomb body (11).

5. Fuel cell system (1) according to claim 4, **characterised in that** the first and the second group of passages are arranged in alternating layers in the monolithic honeycomb body (11).

6. Fuel cell system (1) according to any of claims 1 to 5, **characterised in that** one or more open coupling openings for one of the two groups of passages is or are located at an end face of the monolithic honeycomb body (11).

7. Fuel cell system (1) according to claim 6, **characterised in that** one or more open coupling openings of the other group of passages is or are closed at the end face, preferably by a distributor cap.

8. Fuel cell system (1) according to any of claims 1 to 7, **characterised in that** the circumferential coupling openings are produced by machining.

9. Fuel cell system (1) according to claim 8, **characterised in that** that the circumferential coupling openings are produced by slitting (16).

10. Fuel cell system (1) according to any of claims 1 to 9, **characterised in that** the direct heat and humidity transfer between the oxidant (A) and the exhaust gas (B) is carried out in the gas-to-gas humidification device (7).

11. Fuel cell system (1) according to claim 10, **characterised by** a bypass line (8) which bypasses the gas-to-gas humidification device (7).

12. Fuel cell system (1) according to any of the preceding claims, **characterised in that** a condensate trap is provided downstream of the gas-to-gas humidification device (7).

## Revendications

1. Système à piles à combustible (1) doté d'au moins un dispositif de piles à combustible (2) et un agencement d'alimentation (3) destiné à alimenter le dispositif de piles à combustible (2) par un moyen d'oxydation (A), l'agencement d'alimentation (3) présentant un dispositif d'humidification gaz - gaz (7) lequel est conçu et/ou disposé, pour humidifier le moyen d'oxydation (A) pour le dispositif de piles à combustible (2) à l'aide de l'humidité provenant des gaz d'échappement (B) du dispositif de piles à combustible (2), et le dispositif d'humidification gaz - gaz (7) présentant une partie de gaz d'échappement (14) et une partie de moyen d'oxydation (13), lesquelles sont séparées l'une de l'autre par une couche de séparation, la couche de séparation permettant le transfert de l'humidité à partir de la partie de gaz d'échappement (14) dans la partie de moyen d'oxydation (13) servant à humidifier le moyen d'oxydation (A), **caractérisé en ce que** le dispositif d'humidification gaz - gaz (7) présente un corps monolithique en nid d'abeilles (11) pour former la partie de gaz d'échappement (14) et la partie de moyen d'oxydation (13) ; de plus, une pluralité de canaux (12) étant introduits dans le corps monolithique (11) en nid d'abeilles, - parmi eux un premier groupe de canaux forme la partie de gaz d'échappement (14) et un second groupe de canaux la partie de moyen d'oxydation (13), et une ou plusieurs ouvertures de liaison pour l'un parmi le premier ou le second groupe de canaux est/sont disposée(s) sur la surface périphérique du corps monolithique (11) en nid d'abeilles.

2. Système de piles à combustible (1) selon la revendication 1, **caractérisé en ce que** la couche de séparation entoure le matériau de base du corps monolithique en nid d'abeilles (11) ou est formée à partir de celui-ci.

3. Système de pile combustible (1) selon l'une quelconque des revendications 1 ou 2, **caractérisé en ce que** la couche de séparation est recouverte et/ou traitée au moyen d'un matériau fonctionnel du groupe zéolithe, dioxyde de silicium ou polymère.

4. Système de piles à combustible (1) selon l'une quelconque des revendications 1 à 3, **caractérisé en ce que** le premier et le second groupe de canaux sont disposés uniformément successivement dans le corps monolithique en nid d'abeilles (11).

5. Système de piles à combustible (1) selon la revendication 4, **caractérisé en ce que** le premier et le second groupe de canaux sont disposés successivement en couches dans le corps monolithique en nid d'abeilles (11).

6. Système de piles à combustible (1) selon l'une quelconque des revendications 4 à 5, **caractérisé en ce qu'**un ou plusieurs ouvertures de liaison ouvertes destinée(s) à l'un des deux groupes de canaux est/sont disposée(s) sur une face avant du corps monolithique en nid d'abeilles (11).

7. Système de piles à combustible (1) selon la revendication 6, **caractérisé en ce qu'**une ou plusieurs ouvertures de liaison des autres groupes de canaux est/sont fermée(s) sur la face avant de préférence par un clapet de distribution.

8. Système de pile à combustible (1) selon l'une quelconque des revendications 1 à 7, **caractérisé en ce que** les ouvertures de liaison sur la périphérie sont formées par des évidements.

9. Système de pile à combustible (1) selon la revendication 8, **caractérisé en ce que** les ouvertures de liaison sur la périphérie sont formées par des entailles.

10. Système de piles à combustible (1) selon l'une quelconque des revendications 1 à 9, **caractérisé en ce que** le transfert d'humidité et de chaleur entre le moyen d'oxydation (A) et le gaz d'échappement (B) s'effectue dans le dispositif d'humidification gaz - gaz (7).

11. Système de pile à combustible (1) selon la revendication 10, **caractérisé par** une conduite de dérivation (8) qui contourne le dispositif d'humidification gaz - gaz (7).

12. Système de pile à combustion (1) selon l'une quelconque des revendications précédentes, **caractérisé en ce que** le dispositif d'humidification gaz - gaz (7) est monté en aval d'un séparateur de condensat.
